# EUROPÄISCHE PATENTSCHRIFT

(11) **EP 0 814 245 B1**
(45) Veröffentlichungstag und Bekanntmachung des Hinweises auf die Patenterteilung: **19.12.2001**
(21) Anmeldenummer: 97109345.5
(22) Anmeldetag: 10.06.1997
(51) Int. Cl.: F02B 47/08, F02B 17/00, F02D 13/02, F01L 3/06

(54) **Verfahren und Vorrichtung zum Betreiben einer fremdgezündeten Hubkolben-Brennkraftmaschine**
Method and device for operating a spark ignited piston internal combustion engine
Procédé et dispositif pour faire fonctionner un moteur à combustion interne à pistons à allumage commandé

(30) Priorität: 20.06.1996 DE 19624547
(43) Veröffentlichungstag der Anmeldung: 29.12.1997
(73) Patentinhaber: Volkswagen Aktiengesellschaft, 38436 Wolfsburg (DE)
(72) Erfinder: Stellet, Hans-Peter, 38112 Braunschweig (DE); Endres, Helmut, Dr., 38518 Gifhorn (DE)

(56) Entgegenhaltungen:
- EP-A- 0 529 676
- EP-A- 0 594 463
- DE-A- 3 436 461
- FR-A- 2 703 107
- GB-A- 2 134 596
- US-A- 4 354 463
- US-A- 4 732 118

## Beschreibung

Die Erfindung betrifft ein Verfahren zum Betreiben einer fremdgezündeten Hubkolben-Brennkraftmaschine, deren Gaswechsel von periodisch betätigten Einlaß- und Auslaßventilen gesteuert wird, gemäß dem Oberbegriff des Patentanspruches 1.

Aus der gattungsgemäßen DE-OS 21 25 368 ist es für eine innere Abgasrückführung bekannt, den Gaswechsel durch periodisch betätigte Einlaß- und Auslaßventile derartig vorzunehmen, daß während der Öffnung des Einlaßventiles durch einen Zusatznocken eines Auslaßnockens kurzzeitig das Auslaßventil geöffnet wird, wodurch während dieser Ventilüberschneidungsphase zwischen Einlaß- und Auslaßventil durch die Abwärtsbewegung des Hubkolbens Abgas aus einem Abgaskanal in den Brennraum zurückgeführt wird. Über nicht näher bezeichnete hydraulische Regulierstößel soll bei Leerlaufdrehzahlen die zusätzliche Betätigung des Auslaßventiles während des Einlaßtaktes unterbleiben. Die Laufruhe dieser gattungsgemäßen Brennkraftmaschine scheint möglicherweise infolge einer erhöhten Turbulenz der Frischgasbeschickung verbessert zu sein, d. h. insgesamt durch eine Homogenisierung des zugeführten Frischgases und des rückgeführten Abgases. Irgendwelche Hinweise darauf, in welcher Weise die Gase bei dieser Brennkraftmaschine geführt werden, sind diesem Dokument nicht zu entnehmen.

Aus der EP 0 063 305 A1 ist eine fremdgezündete Hubkolben-Brennkraftmaschine mit einem hubverstellbaren Einlaßventil bekannt, deren Einlaßventil zur Verbrennung magerer Gemische gegenüber dem Brennraum zurückgezogen angeordnet ist. Zur Erzielung einer sicheren Zündung des mageren Gemisches ist im Übergangsbereich des Eintrittsquerschnittes des Einlaßkanales zu dem Brennraum eine einseitig orientierte Fase in Form eines Leitkanales angeordnet, welche das angesaugte Gemisch in Richtung auf die Zündkerze leitet.

Aus der EP 0 594 463 A1 ist eine fremdgezündete Brennkraftmaschine bekannt, bei der zurückgeführtes Abgas durch eine entsprechende Kanalgestaltung eine Drallströmung erhält. Hierbei bleibt zunächst das Einlaßventil geschlossen, während das Auslaßventil öffnet, so daß Abgas zurückströmt. Danach wird das Auslaßventil geschlossen und das Einlaßventil zur Einströmung von Frischgas geöffnet.

Aus der DE 34 36 461 ist es bekannt, einen Drall in einem Brennraum dadurch zu erzeugen, daß der entsprechende Gaskanal einen gegenüber dem Brennraum zurückgezogen angeordneten, von dem zugeordneten Ventil beherrschten Strömungsquerschnitt aufweist und dem Gas die Drallströmung durch eine im Strömungsquerschnitt ausgebildete Fase aufgeprägt wird.

Der Erfindung liegt die Aufgabe zugrunde, ein Verfahren zum Betreiben einer fremgezündeten Hubkolben-Brennkraftmaschine anzugeben, mit dem signifikante Verbrauchsabsenkungen insbesondere im Teillastbereich erzielt werden sowie ein unerwünschter Anstieg von HC- und CO-Emissionen vermieden ist, wobei keine Nachteile im Vollastbereich entstehen sollen.

Die Lösung dieser Aufgabe gelingt bei einem Verfahren der o. g Art mit den im Anspruch 1 gekennzeichneten Merkmalen. Vorteilhafte Ausgestaltungen der Erfindung sind in den abhängigen Ansprüchen angegeben.

Die Erfindung erzielt eine signifikante Verbrauchsabsenkung insbesondere im Teillastgebiet durch eine interne Rückführung von vergleichsweise hohen Abgasmengen, wobei gleichzeitig der Anstieg von HC- und CO-Emissionen vermieden ist. Die hohe Restgasverträglichkeit des hier verwendeten Brennverfahrens wird erreicht durch eine gezielte Ladungsschichtung von Abgas und Frischgas, d. h. unter weitgehender Vermeidung einer Homogenisierung.

Hierbei wird dem über das Einlaßventil einströmenden Frischgas eine Strömungsbewegung derart aufgeprägt, daß sich aus Abgas-Drallströmung und der Frischgasströmungsbewegung im Brennraum eine Ladungsschichtung mit in der Nähe einer Zündkerze erhöhter Frischgaskonzentration einstellt. Dem zurückgeführten Abgas wird die Drallströmung durch eine sich nur teilumfänglich um den Strömungsquerschnitt erstreckende Fase aufgeprägt, wobei die beiden den Auslaßventilen zugeordneten Fasen mit ihren Richtungen derart voneinander abweichen, daß sich zwei gegenläufig zueinander um parallele Zylinderachsen rotierende Drallströmungen ausbilden.

Erfindungswesentlich ist also, daß eine vergleichsweise große Abgasmenge aus dem Abgaskanal zurückgeführt wird, welches durch eine gezielte Verschiebung zumindest der Auslaßventilerhebungskurve relativ zum Kurbelwinkel erzielt wird, daß dem über zwei Auslaßkanäle rückgeführten Abgas während des Ausströmens aus den Abgaskanälen eine gezielte, gegenläufige Drallströmung aufgeprägt wird, welche gemeinsam mit dem Zustrom des Frischgases eine Ladungsschichtung derart bewirkt, daß in der Nähe der Zündkerze ein zündwilliges Gemisch vorliegt.

Die Erfindung ist bei mehrventiligen Brennkraftmaschinen anwendbar.

In besonders bevorzugter Ausgestaltung kann zumindest eines der Auslaßventile mit dem von ihm beherrschten Strömungsquerschnitt des Abgaskanales gegenüber dem Brennraum zurückgezogen angeordnet sein.

Die dem über das oder die Einlaßventile zuströmende Frischgas aufgeprägte Strömungsbewegung ist im einfachsten Fall die, die sich infolge einer gewöhnlichen Kanalgestaltung einstellt. Hierbei ist für die Ladungsschichtung die Lage des Einströmquerschnittes wichtig.

Bevorzugt kann vorgesehen sein, daß dem Frischgas eine Drallströmung aufgeprägt wird, welche im Vergleich mit der Abgas-Drallströmung ein vergleichsweise niedriges Drallniveau aufweist.

Dem Frischgas wird bevorzugt eine tumbleförmige Frischgasströmung aufgeprägt, d. h. das Frischgas rotiert um eine quer zur Zylinderachse verlaufende Achse. Hierbei kann in weiterer vorteilhafter Ausgestaltung die Intensität der Tumble-Strömung über beispielsweise in den Einlaßkanälen angeordnete Klappen einstellbar sein.

Die Verstellung der Auslaß- und/oder Einlaß-Ventilerhebungskurven kann mit jeder bekannten Vorrichtung zur Verschiebung solcher Kurven gegenüber dem Kurbeltrieb vorgenommen werden. Diese Verschiebung kann sowohl mit einem sogenannten Zwei-Punktsteller wie auch mit einer kontinuierlich arbeitenden Vorrichtung vorgenommen werden.

Weitere Vorteile der Erfindung ergeben sich aus dem nachfolgend anhand einer Zeichnung näher erläuterten Ausführungsbeispiel der Erfindung. Es zeigen:
- Fig. 1: perspektivisch und schematisch eine Ansicht bei einer mehrventiligen Brennkraftmaschine,
- Fig. 2: eine Ansicht eines Brennraumdeckes bei einer mehrventiligen Brennkraftmaschine,
- Fig. 3: einen Schnitt entlang der Linie IV - IV gemäß Figur 2,
- Fig. 4: Ventilerhebungskurven mit einer verschobenen Auslaß-Ventilerhebungskurve und
- Fig. 5: Ventilerhebungskurven mit zwei verschobenen Kurven.

Eine fremdgezündete Hubkolben-Brennkraftmaschine weist zumindest einen Zylinder 1 mit einem gleitverschieblich darin gelagerten Kolben 2 auf. Einem zwischen diesem Kolben 2 und einem Brennraumdeck 3 definierten Brennraum 4 wird über ein oder mehrere Einlaßventile 5 Frischgas zugeführt.

Die Verbrennungsabgase werden aus dem Brennraum 4 über mehrere Auslaßventile 6, 7 eines Abgaskanales 8 abgeführt. Die genannten Ventile 5, 6, 7 werden in nicht gezeigter und bekannter Weise periodisch von Nocken einer oder mehrerer Nockenwellen angetrieben, welche in angetriebener Verbindung mit einer Kurbelwelle der Brennkraftmaschine stehen.

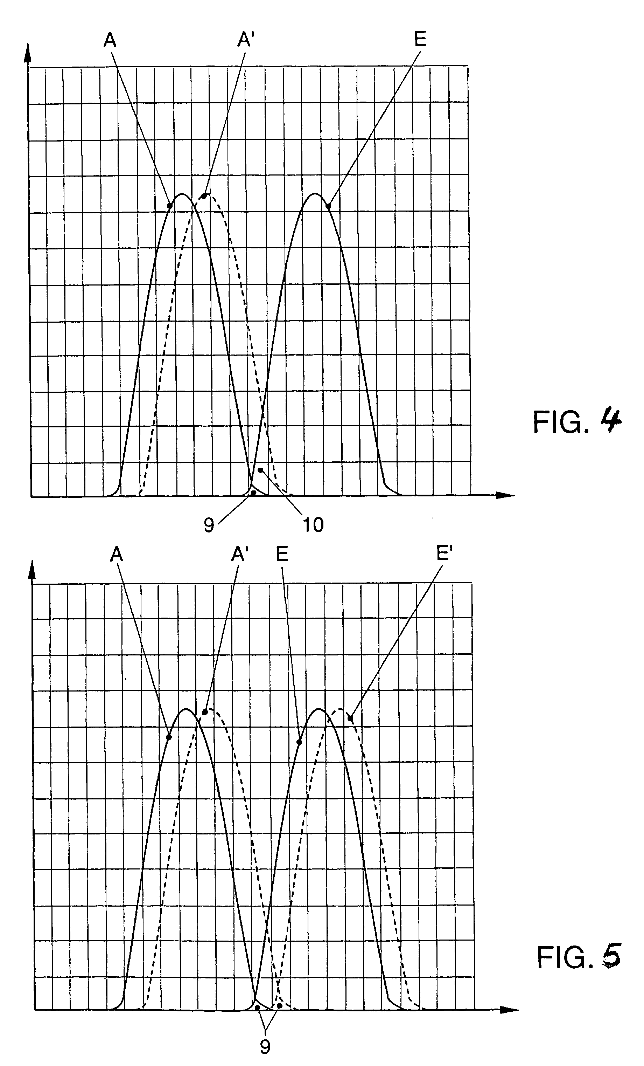

Der zeitliche Verlauf der Ventilerhebung über dem Kurbelwinkel der Kurbelwelle ist in Figur 4 in Form einer Auslaß-Ventilerhebungskurve A und einer Einlaß-Ventilerhebungskurve E dargestellt. Zwischen diesen beiden Kurven A und E liegt eine vergleichsweise kleine Ventilüberschneidungsphase 9 vor.

Zwischen der Kurbelwelle und der Nockenwelle ist eine an sich bekannte Einrichtung zur Veränderung der Lage zumindest der Auslaß-Ventilerhebungskurve A relativ zum Kurbelwinkel derart angeordnet, daß diese Kurve in die mit A' bezeichnete Kurvenposition verschoben werden kann, wodurch sich dann eine vergrößerte Ventilüberschneidungsphase 10 einstellt. Die Einrichtung zur Veränderung der Lage der Ventilerhebungskurve relativ zum Kurbelwinkel kann auch so eingesetzt werden, daß beide Nockenwellen eines Mehrventilmotors synchron verstellt werden (Figur 5).

Die Einlaß- bzw. Auslaßventile 5 bzw. 6, 7 beherrschen jeweils mit einem Ventilsitzring 11 bzw. 12 versehene Strömungsquerschnitte 13 eines Einlaßkanales 14 bzw. 15 und 16 des Abgaskanales 8.

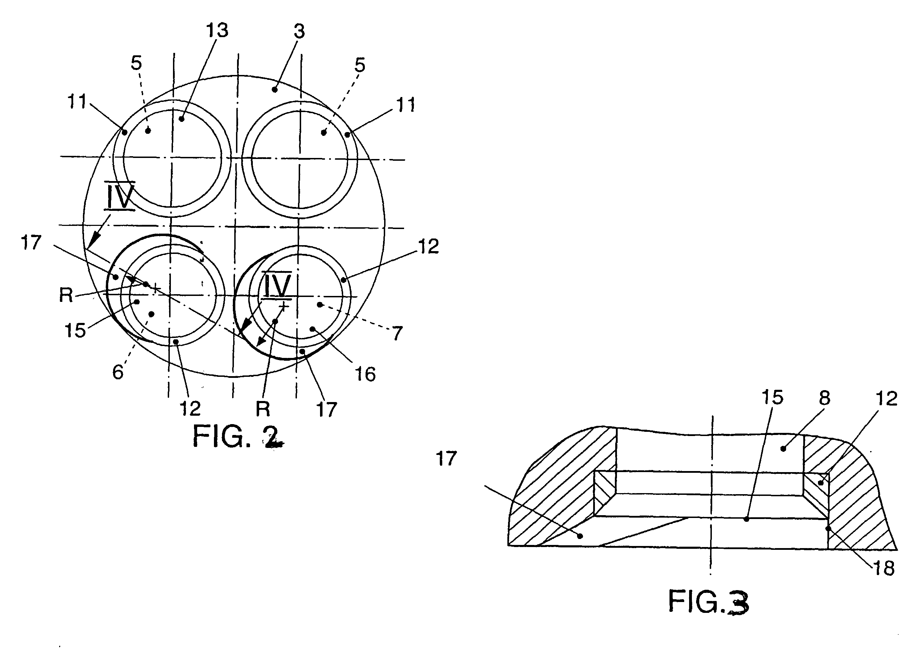

Gemäß Figuren 2 und 3 ist zumindest ein Strömungsquerschnitt 15 des Abgaskanales 8 gegenüber dem Brennraum 4 zurückgezogen im Brennraumdeck 3 angeordnet. Einseitig zu diesem Strömungsquerschnitt 15 ist in einem Übergangsbereich zum Brennraumdeck 3 eine kanalartige Fase 17 angeordnet. Die maximale Erstreckung dieser Fase 17 in radialer Richtung zum Strömungsquerschnitt 15 definiert eine Richtung R, welche tangential zu einer Zylinderachse Z weist, welche in Bewegungsrichtung des Hubkolbens 2 verläuft.
Der der Fase 17 gegenüberliegende Bereich des Brennraumdeckes 4 stellt eine kreisbogenförmige Maske 18 für das Auslaßventil 6 in einem ersten Hubbereich dar.

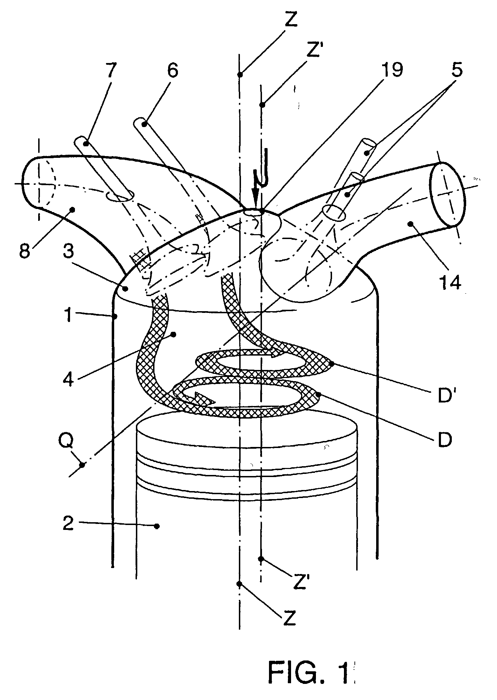

Die Richtungen R der Fasen 17 bei mehreren Auslaßventilen 6, 7 weichen zur Einstellung einer gezielt gegenläufigen Drallströmung D und D' (Fig. 1) voneinander ab.

Dem Brennraum 4 ist des weiteren etwa zentral eine Zündkerze 19 zugeordnet.

Der Betrieb der vorbeschriebenen Hubkolben-Brennkraftmaschine stellt sich wie folgt dar.
In einem oder mehreren bestimmten Lastbereichen, etwa einem Teillastbereich, wird mittels der Einrichtung zur Veränderung der relativen Lage der Ventilerhebungskurven relativ zum Kurbelwinkel während einer Abwärtsbewegung des Kolbens 2 die Auslaß-Ventilerhebungskurve A in ihre Position A' verschoben, wodurch die Auslaßventile 6, 7 während des Ansaughubes geöffnet sind. Aufgrund der Fase 17 und der Maske 18 stellt sich in einem ersten Hubbereich der Auslaßventile 6, 7 eine gezielte Drallströmung D ein, da das Abgas den Abgaskanal 8 nur über den zwischen Auslaßventil 6, 7 und Fase 17 gebildeten Spalt verlassen kann. Erst bei Überschreiten eines bestimmten Ventilhubes wird die Maske 18 unwirksam, so daß sich das Abgas auch in dieser Richtung ausbreiten kann. Die Lage der Richtungen R der Fasen 17 sind so gewählt, daß die rückgeführten Abgasmengen in der Drallströmung D, D' um die Zylinderachse Z rotieren. Die Verschiebung der Ventilerhebungskurve A relativ zum Kurbelwinkel beträgt bis zu 60° Kurbelwinkel, insbesondere zwischen 20° und 45°. Hierdurch ist sichergestellt, daß eine vergleichsweise hohe Abgasmenge intern rückgeführt wird.

Die Einströmung von Frischgas über den Einlaßkanal 14 kann entweder drallfrei, d. h. ausschließlich durch eine konventionelle Gestaltung des Einlaßkanales 14 bestimmt oder mit einem Drall erfolgen, wobei das Drallniveau dieser Frischgasströmung gegenüber der rückgeführten Abgasströmung in der Regel deutlich niedriger ist.

Bei dem mehrventiligen Motor gemäß Figur 1 wird die Frischgasströmung bevorzugt derartig zugeführt, daß sich eine vergleichsweise leichte Tumble-Strömung einstellt, d. h. der Frischgasstrom rotiert um eine quer zur Zylinderachse Z verlaufende Achse Q. Zur Beeinflussung des Tumble-Niveaus können in an sich bekannter Weise beispielsweise verstellbare Klappen im Einlaßkanal 14 vorgesehen sein.

Infolge der sich an der Peripherie der Zylinderwandung einstellenden Drallströmung D, D' des rückgeführten Abgases und des über den oder die Strömungsquerschnitte 13 einströmenden Frischgases stellt sich im Brennraum 4 eine deutliche Ladungsschichtung ein, wobei eine erhöhte Frischgaskonzentration im Bereich der Zündkerze 19 entsteht, so daß dort sicher gezündet werden kann. Insbesondere in Teillastgebieten der Brennkraftmaschine, in welchen keine hohe Lastanforderung vorliegt, kann durch die Rückführung der vergleichsweise großen Abgasmenge eine signifikante Verbrauchsabsenkung erzielt werden, wobei kein Anstieg der HC- und CO-Emissionen zu beobachten ist.

Gemäß Figur 1 sind die Richtungen R von zwei Fasen 17 spiegelbildlich derart zueinander angeordnet, daß sich zwei gegenläufig zueinander und jeweils um eine eigene Zylinderachse Z und Z' rotierende Drallströmungen D und D' einstellen. Die Summe der Drallniveaus ist hierbei Null.

Die Dichte des einströmenden Abgases ist hierbei aufgrund der Abgastemperatur im Vergleich zur Frischluftdichte relativ niedrig, d. h. diese Gasströme sind relativ leichtgewichtig. Sie werden durch die einströmende Frischluft seitlich verdrängt und in deren Tumble-Bewegung in verdünnter Form mitgerissen.

## Patentansprüche

1. Verfahren zum Betreiben einer fremdgezündeten Hubkolben-Brennkraftmaschine, deren Gaswechsel von periodisch betätigten Einlaß- und Auslaßventilen (5 und 6, 7) gesteuert wird, wobei mindestens zwei einem Brennraum (4) zugeordnete Auslaßventile (6, 7) vorgesehen sind und wobei femer während einer Ventilüberschneidungsphase (9) zwischen den Ventilerhebungskurven (A, E) der Einlaß- und der Auslaßventile (5 und 6, 7) Abgas aus einem Abgaskanal (8) in einen Brennraum (4) zurückgeführt wird, wobei die Auslaß-Ventilerhebungskurve (A) in Richtung späterer Kurbelwinkel verstellt wird und dem rückgeführten Abgas eine um eine in Bewegungsrichtung des Hubkolbens (2) verlaufende Zylinderachse (Z) rotierende Drallströmung (D) aufgeprägt wird, **dadurch gekennzeichnet, daß** dem über das Einlaßventil (5) einströmenden Frischgas eine Strömungsbewegung derart aufgeprägt wird, daß sich aus Abgas-Drallströmung (D) und der Frischgasströmungsbewegung im Brennraum (4) eine Ladungsschichtung mit in der Nähe einer Zündkerze (19) erhöhter Frischgaskonzentration einstellt, und daß dem zurückgeführten Abgas die Drallströmung (D) durch eine sich nur teilumfänglich um den Strömungsquerschnitt (15; 16) erstreckende Fase (17) aufgeprägt wird, wobei die beiden den Auslaßventilen (6 und 7) zugeordneten Fasen (17) mit ihren Richtungen (R) derart voneinander abweichen, daß sich zwei gegenläufig zueinander um parallele Zylinderachsen (Z, Z') rotierende Drallströmungen (D, D') ausbilden.

2. Verfahren nach Anspruch 1, **dadurch gekennzeichnet, daß** gemeinsam mit der Auslaß-Ventilerhebungskurve (A) auch die Einlaß-Ventilerhebungskurve (E) in Richtung Spät verstellt wird.

3. Verfahren nach Anspruch 1, **dadurch gekennzeichnet, daß** die Abgas-Drallströmung (D) durch eine Auslaßkanalgestaltung erzeugt wird.

4. Verfahren nach Anspruch 3, **dadurch gekennzeichnet, daß** der Abgaskanal (8) einen gegenüber dem Brennraum (4) zurückgezogen angeordneten, von dem Auslaßventil (6; 7) beherrschten Strömungsquerschnitt (15; 16) aufweist.

5. Verfahren nach Anspruch 4, mit mindestens zwei Einlaßventilen (5), **dadurch gekennzeichnet, daß** beide Auslaß-Ventilerhebungskurven (A) parallel und gemeinsam mit der Einlaß-Ventilerhebungskurve (E) in Richtung späterer Kurbelwinkel verschoben werden.

6. Verfahren nach Anspruch 1, mit einem einzigen, dem Brennraum (4) zugeordneten Einlaßventil (5), **dadurch gekennzeichnet, daß** die dem Frischgas aufgeprägte Strömungsbewegung eine Drallströmung ist.

7. Verfahren nach Anspruch 1, mit mehreren dem Brennraum (4) zugeordneten Einlaßventilen (5), **dadurch gekennzeichnet, daß** die dem Frischgas aufgeprägte Strömungsbewegung eine quer zur Zylinderachse (Z) rotierende Tumble-Strömung ist.

8. Verfahren nach Anspruch 7, **dadurch gekennzeichnet, daß** die Intensität der Tumble-Strömung einstellbar ist.

## Claims

1. Method of operating a spark-ignited reciprocating piston internal combustion engine, of which the gas exchange is controlled by periodically actuated inlet and outlet valves (5 and 6, 7), wherein at least two outlet valves (6, 7) are provided which are allocated to a combustion chamber (4) and wherein, furthermore, during a valve overlapping phase (9) between the valve elevation curves (A, E) of the inlet and outlet valves (5 and 6, 7) exhaust gas from an exhaust gas duct (8) is re-circulated into a combustion chamber (4), wherein the outlet valve elevation curve (A) is displaced in the direction of retarded crank angles and impressed upon the re-circulated exhaust gas is a twisting flow (D) which rotates about a cylinder axis (Z) which extends in the direction of movement of the reciprocating piston (2), **characterised in that** a flow movement is impressed upon the fresh gas flowing in via the inlet valve (5) such that the exhaust gas twisting flow (D) and the fresh gas flow movement in the combustion chamber (4) serve to provide a stratified charge with an increased concentration of fresh gas in proximity to a spark plug (19), and that the twisting flow (D) is impressed upon the re-circulated exhaust gas by means of a chamfer (17) which extends merely in a partially circumferential manner around the flow cross-section (15; 16), wherein the two chamfers (17) which are allocated to the outlet valves (6 and 7) deviate from each other in their directions (R) such that two twisting flows (D, D') are formed which rotate in mutually opposite directions around parallel cylinder axes (Z, Z').

2. Method according to claim 1, **characterised in that** together with the outlet valve elevation curve (A) the inlet valve elevation curve (E) is also displaced in the direction of "retarded".

3. Method according to claim 1, **characterised in that** the exhaust gas twisting flow (D) is generated by means of an outlet duct formation.

4. Method according to claim 3, **characterised in that** the exhaust gas duct (8) comprises a flow cross-section (15; 16) which is disposed withdrawn from the combustion chamber (4) and is controlled by the outlet valve (6; 7).

5. Method according to claim 4, having at least two inlet valves (5), **characterised in that** the two outlet valve elevation curves (A) are displaced in parallel and jointly with the inlet valve elevation curve (E) in the direction of crank angles which are retarded to a greater extent.

6. Method according to claim 1, having a single inlet valve (5) which is allocated to the combustion chamber (4), **characterised in that** the flow movement impressed upon the fresh gas is a twisting flow movement.

7. Method according to claim 1, having a plurality of inlet valves (5) which are allocated to the combustion chamber (4), **characterised in that** the flow movement impressed upon the fresh gas is a turnble flow movement which rotates in a transverse manner with respect to the cylinder axis (Z).

8. Method according to claim 7, **characterised in that** the intensity of the tumble flow movement can be adjusted.

## Revendications

1. Procédé d'exploitation d'un moteur à combustion interne à pistons alternatifs et à allumage commandé, dont le changement de gaz est commandé par des soupapes d'admission et d'échappement (5 et 6, 7) actionnées périodiquement, dans lequel on prévoit au moins deux soupapes d'échappement (6, 7) associées à une chambre de combustion (4), dans lequel on renvoie en plus dans une chambre de combustion (4), pendant une phase de chevauchement de soupapes (9) entre les courbes de soulèvement de soupapes (A, E) des soupapes d'admission et d'échappement (5 et 6, 7), du gaz d'échappement issu d'un canal de gaz d'échappement (8) et dans lequel on décale la courbe de soulèvement de soupapes d'échappement (A) en direction d'un angle de vilebrequin plus tardif et on applique au gaz d'échappement renvoyé un écoulement en tourbillon (D) tournant autour d'un axe de cylindre (Z) qui s'étend dans la direction de mouvement du piston alternatif (2), **caractérisé en ce qu**'on applique au gaz frais affluant par la soupape d'admission (5) un mouvement d'écoulement de telle sorte qu'il se crée à partir de l'écoulement en tourbillon du gaz d'échappement (D) et du mouvement d'écoulement du gaz frais dans la chambre de combustion (4) une stratification de charge avec une concentration de gaz frais accrue à proximité d'une bougie d'allumage (19) et en ce qu'on applique au gaz d'échappement reconduit l'écoulement en tourbillon (D) au moyen d'un biseau (17) qui s'étend seulement sur une partie de la circonférence de la section de passage (15 ; 16), les deux biseaux (17) associés aux soupapes d'échappement (6 et 7) s'écartant l'un de l'autre par leur direction (R) de telle sorte qu'il se forme deux écoulements en tourbillon (D, D') tournant en sens inverse l'un de l'autre autour d'axes de cylindres parallèles (Z, Z').

2. Procédé selon la revendication 1, **caractérisé en ce que,** en même temps que la courbe de soulèvement de soupapes d'échappement (A), on décale aussi la courbe de soulèvement de soupapes d'admission (E) en direction d'un retard.

3. Procédé selon la revendication 1, **caractérisé en ce que** l'écoulement en tourbillon du gaz d'échappement (D) est produit par une configuration du canal de gaz d'échappement.

4. Procédé selon la revendication 3, **caractérisé en ce que** le canal de gaz d'échappement (8) comporte une section de passage (15 ; 16) placée en retrait par rapport à la chambre de combustion (4) et contrôlée par la soupape d'échappement (6 ; 7).

5. Procédé selon la revendication 4, avec au moins deux soupapes d'admission (5), **caractérisé en ce qu'**on décale les deux courbes de soulèvement de soupapes d'échappement (A) parallèlement et conjointement à la courbe de soulèvement de soupapes d'admission (E) en direction d'un angle de vilebrequin postérieur.

6. Procédé selon la revendication 1, avec une seule soupape d'admission (5) associée à la chambre de combustion (4), **caractérisé en ce que** le mouvement d'écoulement appliqué au gaz frais est un écoulement en tourbillon.

7. Procédé selon la revendication 1, avec plusieurs soupapes d'admission (5) associées à la chambre de combustion (4), **caractérisé en ce que** le mouvement d'écoulement appliqué au gaz frais est un écoulement basculé tournant transversalement par rapport à l'axe de cylindre (Z).

8. Procédé selon la revendication 7, **caractérisé en ce que** l'intensité de l'écoulement basculé est réglable.
